# EUROPEAN PATENT APPLICATION

(11) **EP 1 840 083 A1**
(43) Date of publication of application: **03.10.2007**
(21) Application number: 06019439.6
(22) Date of filing: 18.09.2006
(51) Int. Cl.: C01B 31/36

(54) **A process for the production of silicon carbide**

(30) Priority: 28.03.2006 IN DE08612006
(71) Applicant: COUNCIL OF SCIENTIFIC & INDUSTRIAL RESEARCH, New Delhi 110001 (IN)
(72) Inventor: Bimanranjan, Mazumder, 751 013 Orissa (IN)
(74) Representative: Harrison Goddard Foote

(57) **Abstract**

The present invention provides a process for the preparation of silicon carbide from spent pot liners generated from aluminum smelter plants. The present invention involves the use of spent pot liner by means of comminution of SPL; by a chemical reaction; followed by mixing it with appropriate proportion of commercially available quartz powder (high purity silica powder having particle size of -100 BS mesh); and, further followed by heating it in an argon plasma furnace for about 3 minutes. The product of this process is a granular powder of silicon-carbide as determined by XRD analysis. The yield of the carbon powder obtained is in the range of 30-35% and the percentage conversion to silicon carbide obtained is in the range of 70 to 85%.

## Description

### Field of the invention

The present invention relates to a process for the preparation of silicon carbide from spent pot liners generated from aluminum smelter plants.

Carbon pot liners are used as cathode in electrolysis cell for extracting aluminum by smelter plants and at the end of their service life these carbon cathode blocks are rejected and new carbon electrodes are installed. These used and rejected carbon liners are called Spent Pot Liners and they are highly contaminated by fluoride, cyanide, alkali etc. Being contaminated with highly toxic elements, their disposal poses a great problem for all aluminum smelter plants. Accordingly, the present invention provides a means for utilization of these pot liners and convert them to a useful industrial product, namely silicon-carbide.

### Background of the invention

Attempts have been made earlier to remove contaminants from spent pot liners. Reference may be made to (U.S. Patent 6498282, granted 24 December, 2002) wherein oxides of iron was added to spent pot liner and melted in a high temperature furnace in order to remove the contaminants in the form of slag. In yet another prior art (U.S Patent 5245116, granted September 14,m 1993) lime was added to crushed spent pot liner in an aqueous medium and the fluoride precipitated as calcium fluoride by heating to 140°C in presence of clay to fix soda as well. In yet another prior art (U.S Patent 435279, granted September 24, 1996) Henning & Mollgard disclosed a process whereby aluminum and fluoride in spent pot liner was recovered as AlF₂OH by leaching with dilute sulfuric acid and adjusting fluorine to aluminum ratio between 1.8-2.2. In yet another similar prior art (U.S Patent 4900535, U.K. Patent Application 056422A and U.S Patent 2858198, granted in 1986), the spent pot liner after crushing was treated with concentrated sulfuric acid and heated to elevated temperature (1200°C) whereby fluoride values are reacted to and withdrawn as hydrofluoric acid. These pyrohydrolysis processes exhibits inconvenience like corrosion to equipments etc and thus have not been commercialized yet. In yet another prior art (U.S Patent 2186433) the spent pot liner was treated with a mixture of hydrochloric acid and sulfuric acid and the fluoride value was precipitated as cryolite. The process has inherent drawback of contaminating the process liquor and precipitated end product due to dissolution of iron and silica and coprecipitation of iron hydroxide. In yet another prior art (U.S. Patent 4889695 and European Patent Application No. 117616) spent pot liners were treated with alkali like sodium-hydroxide. Although fluoride value was recovered by precipitating end product, alkali route takes a long time to reach completion, results in foam formation and requires rather complicated careful controlled conditions. Further alkali is not removed completely by such treatment. In yet another prior art (U.S. Patent 4508689) removal of alkali in above process attempted by incomplete neutralization method to make precipitated product (aluminum fluoride) sodium free. But incomplete neutralization to pH below 5 results in significant loss of fluorine value. Further attempts have been made to decontaminate and produce silicon-carbide from spent pot liner in a closed electrothermic smelting furnace. Reference may be made to a prior art disclosed by Lindkvist et al (US.Patent 5286274) crushed untreated spent pot liner was mixed with silica and melted at a temperature of 1300 to 1750°C. The spent pot liner was oxidized in smelting furnace after incorporating oxidizing agents like calcium oxide to form calcium-fluoride, calcium aluminate or calcium aluminate silicate slag. However such processes are simply not well suited to remove all impurities contained in the waste material (spent pot liner). In a similar prior art (U.S. Patent 6471931 granted October 29,2002) Brosnan disclosed a process where the spent pot liner first crushed to less than 1 mm size, then mixed with appropriate amount of silica and then heated in a electric resistance furnace under close control of reducing atmosphere to a temperature between 1800 to 2200°C. Silica for such purpose was derived from fumed silica, fly ash, clay or metal silicones. The product was then separated gravimetrically. In such process starting material being untreated highly contaminated carbon source, the final product purity is unknown. Further emanation of hydrofluoric acid may corrode the reacting furnace and its accessories. Energy consumed both in pulverization of spent pot liner and prolonged heating in resistance furnace is also high. Other similar prior arts for making silicon carbide from carbon include U.S. Patents 492767, 3306705, 4659022, and 5190737.

### Objects of the invention

The main objective of the present invention is to provides a process for making silicon carbide from spent pot liners (hereinafter referred to as "SPL") generated by aluminum smelter plants which obviates the drawbacks of the hitherto known prior art as detailed above.

Another objective of this process is to remove the corrosive constituents like fluoride, for example, in the SPL before reacting it at high temperature in a furnace in order to avoid corrosion to the furnace lining and its accessory elements.

### Summary of the invention

According to the present invention, there is provided a process for the preparation of silicon-carbide from spent pot liners generated from aluminum smelter plants, the said process being characterized by comprising the steps of:
a. crushing the SPL to a size range of half-inch to dust,
b. treating said crushed material with concentrated chromic acid,
c. washing the treated material with water until the filtrate is neutralized,
d. drying the washed material
e. subjecting the dried material to a thermal shock to obtain carbon powder,
f. mixing said carbon powder with silica powder in a molar ratio of about 1:3 to 1:5 and reacting the resultant mixture in a high temperature furnace to obtain silicon-carbide powder.

The process according to the present invention provides a unique acid treatment process by which the majority of contaminants in the SPL are removed before the reaction of recovered carbon powder with silica powder in a furnace to produce silicon-carbide. The process reacts the said recovered carbon powder from SPL along with commercially available silica powder in a high temperature furnace, preferably an argon plasma furnace, thereby reducing formation time of the end product silicon-carbide to few minutes only and provides a tool for handling and processing of large volume of raw material in a shorter time to manufacture silicon-carbide. SPL processed by the said process removes the majority of all contaminants, generates a carbon powder clean enough not to produce toxic fumes of the contaminants generally occurring in SPL and thus furnace linings are not affected.
In an embodiment of the process according to the present invention the starting SPL obtained from aluminium smelter plant has fluorides, alkalies and free aluminium in the range of 8-9%, 7-8% and 2-3%, respectively.

In another embodiment the free flowing carbon powder obtained in step (e) has an average particle size of about 20 micrometer. The process of the present invention provides finer particles of carbon particles from the SPL by chemical reaction for preferred and complete reaction between silica and the recovered carbon from SPL in the high temperature reaction step. The carbon powder obtained after the drying step may be free flowing.

The carbon powder recovered from SPL is heated along with silica in a special furnace such as, for example, a plasma furnace, so that the reaction time can be reduced considerably and thereby enhance the rate of production of silicon carbide on a commercial scale.

In yet another embodiment the yield of the carbon powder obtained in step (b) is in the range of 30-35% of the starting weight of SPL.

In still another embodiment the percentage conversion to silicon carbide obtained is in the range of 70 to 85%.

In step (a) the SPL is crushed so as to have a particle size of from half-inch to dust. Preferably, about 70% of the crushed material is constituted by the half-inch fraction.

The crushed SPL may be treated with chromic acid for a period of 10 to 30 minutes, more preferably for a period of 15 to 25 minutes. The reaction is exothermic and preferably, the temperature of reaction is maintained below about 90°C.

Preferably, the material after treatment with chromic acid may be washed with distilled water.

After washing, the treated material may be dried at a relatively low temperature such as about 100°C, for example.

The thermal shock treatment of step (e) may be carried out within a temperature range of 800 to 1000°C, however, a temperature in the region of 900°C is preferred.

The thermal shock step may be carried out for a period of 1 to 2 minutes.

The silica powder may have a particle size of less than -100 BS mesh or, more preferably, a particle size of less than -200 BS mesh.

The reaction time in the high temperature furnace, for example, an argon plasma arc furnace, may be in the range from 1 to 4 minutes, for example, about 2 minutes.

### Detailed description of the invention

The present invention relates to a process for use of SPL by means of comminution of SPL; by a chemical reaction; followed by mixing it with appropriate proportion of commercially available quartz powder (high purity silica powder preferably having a particle size of -100 BS mesh); and, further followed by heating it in an argon plasma furnace for about 3 minutes. The product of this process is a granular powder of silicon-carbide as determined by XRD analysis. Silicon carbide is a hard refractory material having high thermal conductivity value. It possesses high strength even at elevated temperature and is a useful commodity in commerce with many useful applications like abrasive material, high temperature resistant refractory block, structural ceramics, material for making hard dies, crucibles in metallurgical industries etc. Other uses are expected along the lines of commercially manufactured silicon carbide.

### Examples

In the present invention the SPL collected from aluminum smelter plants is first broken down by jaw crusher/hammer mill to have a size from half-inch to dust size with half-inch particles constituting about 70% of the bulk. In laboratory experiments these broken pieces of SPL were placed in a glass vessel and then slowly, freshly prepared chromic acid was added with constant stirring. The reaction is exothermic and addition rate of the acid needs to be controlled to keep the reaction temperature within about 90°C. The total amount of acid needs to be added just to make the mixture a thick paste. The mixture is then allowed to stand for about 15-25 minutes. End of reaction is indicated by no more emanation of gas bubbles from the mixture. The mixture is allowed to cool down to about room temperature and then equal volume of distilled water added with stirring followed by filtration through a regular filter paper placed in a funnel. The residue is repeatedly washed with distilled water until the filtrate is free of acid. The fluoride escapes as hydrofluoric acid and can be trapped by bubbling the emanated gas through a dilute solution of sodium hydroxide. The filtrate containing chromium (III) ion can be precipitated by addition of sodium hydroxide solution. The washed carbon powder is practically free from all contaminants as can be seen in Tables 1 and 2 below. The carbon powder thus derived from SPL is then dried in an oven at around 100°C for two hours and then subjected to a thermal shock in a preheated furnace (preheated to about 900°C for about a minute. This results in a free flowing carbon powder having average particle size of 20 microns as determined by Malvern Particle Size Analyzer.

In a preferred embodiment the principal steps of this invention comprise:
a) Breaking the SPL to a size range of half inch to dust (half inch fraction constituting at least 70% of the bulk).
b) Reacting the said crushed SPL with concentrated chromic acid with constant stirring maintaining reaction temperature to about 90°C.
c) Washing the reacted product with distilled water until neutral and drying the recovered carbon powder in an oven at 100°C for about 1 hour.
d) Subjecting the said recovered carbon powder to thermal shock for about a minute in a preheated (preheated to about 900°C) furnace to obtain a free flowing carbon powder.
e) Mixing the said carbon powder with stoichiometric proportion of commercially available silica powder and reacting in an argon plasma furnace for about 3 minutes to obtain silicon-carbide in granular form.

In another preferred embodiment of the present invention a process for making silicon carbide from SPL generated by aluminum smelter plants is provided, which comprises process steps involving crushing the SPL to a size range of half inch to dust (half inch fraction constituting about 70% of the mass), reacting the powdered spent pot liner with concentrated chromic acid for about 15 minutes, washing the reacted mass with distilled water until the filtrate is neutral, drying the recovered carbon powder in an oven at about 100°C for about an hour and thereafter subjecting the said carbon powder to thermal shock in a 900°C preheated furnace for about a minute to transform it to a free flowing carbon powder, thereafter mixing the said carbon powder with about a stoichiometric proportion of commercially available silica powder of less than 200 BS mesh and reacting the mixture in an argon plasma furnace for about 3 minutes to obtain silicon-carbide in granular form.

In Example 1 of the invention, the said carbon powder derived from SPL was mixed (3:1 molar ratio) silica powder (commercially available quartz powder having particle sizes less than 100 BS mesh) and reacted in the high temperature of an argon plasma furnace. The powder is carried by argon gas into the plasma furnace and starts reacting as soon as it enters the high temperature zone of the furnace. Total reaction time is about 3 minutes. The product silicon-carbide was collected in a graphite crucible placed at the bottom of the hearth of the plasma furnace. Supply of argon gas into the furnace was continued for about another 1 minute after the reaction was over.
The collected sample of silicon-carbide was analyzed by XRD apparatus and found to contain substantial amount of silicon-carbide in the powder product.

### Example 2

Carbon powder derived from SPL was mixed in molar ratio of 4:1 (stoichiometric ratio being 3:1) with silica powder (commercial grade quartz powder having a particle size less than 100 BS mesh) and the experiment repeated exactly same as above for Example 1. The granular product indicated a substantial amount of silicon carbide in the product by XRD analysis.

### Example 3

Carbon powder derived from SPL was mixed in molar ratio 5:1 with silica powder (commercial grade quartz powder having particle size less than 100 BS mesh) and the experiment repeated in the argon plasma furnace exactly in the same manner as described for Examples 1 and 2 above. XRD analysis of the granular product indicates presence of substantial amount of silicon-carbide.

The following data is given by way of illustration and therefore should not be construed to limit scope of the present invention:

**Table 1**

| Results showing chromic acid treatment of two different size SPL | | | | | | | |
|---|---|---|---|---|---|---|---|
| Expt No | SPL sieve | Before Treatment | | | After Treatment | | |
| | | Fluoride | Alkali | Free Al | Fluoride | Alkali | Free Al |
| 1 | ½ inch to dust | 8% | 7% | 2% | 0.0132% | 0.19% | Nil |
| 2 | -100 BS | 8% | 7% | 2% | 0.0039% | 0.10% | Nil |

**Table 2**

| Characteristics of the carbon powder derived from SPL | | | | |
|---|---|---|---|---|
| Expt No. | SPL Sieve size | Average Particle Size | Yield(%) | Ash (%) |
| 1 | ½ inch to dust | 20 micro-meter | 30 | 10 |
| 2 | -100 BS | 20 micro-meter | 30 | 10 |

**Table 3**

| Example No | Molar ratio of Silica:Carbon* | Type of plasma% used | Conversion to SiC |
|---|---|---|---|
| 1 | 1:3 | Argon | 70% |
| 2 | 1:4 | Argon | 85% |
| 3 | 1:5 | Argon | 85% |

Above results shown in Table 3 indicate decontaminated SPL treated by the process according to the present invention can be substantially converted into silicon carbide using the said process steps. Further, the treatment time being small it will be easier to process large volume of said raw materials in an actual commercial scale unit.

### Advantages of the invention are:

1. The process provides a means for utilizing waste material such as SPL of aluminum smelter plants.
2. The said SPL need not be powdered to very fine size and thus saving both energy and time in processing the starting material.
3. Since the SPL is cleaned of its contaminants before reacting in high temperature, the furnace and its ancillaries are not corroded by the said process.
4. The process is simple and can be carried out in shortest possible time.
5. The process does not require stringent control of reaction parameters as required in solution precipitation techniques as mentioned in prior art for deriving the final product.
6. The process is easy to scale up.
7. The process generates a product which has high commercial value.

## Claims

1. A process for the preparation of silicon-carbide from spent pot liners generated from aluminum smelter plants, the said process being
**characterized by** comprising the steps of:
a. crushing the SPL to a size range of half-inch to dust,
b. treating said crushed material with concentrated chromic acid,
c. washing the treated material with water until the filtrate is neutralized,
d. drying the washed material
e. subjecting the dried material to a thermal shock to obtain carbon powder,
f. mixing said carbon powder with silica powder in a molar ratio of about 1:3 to 1:5 and reacting the resultant mixture in a high temperature furnace to obtain silicon-carbide powder.

2. A process according to claim 1 wherein the crushed SPL material is treated for 10 to 30 minutes with chromic acid.

3. A process according to either claim 1 or claim 2 wherein the washed treated material is dried at about 100°C.

4. A process according to any one preceding claim wherein the thermal shock step is carried out at a temperature in the range from 800 to 1000°C.

5. A process according to any one preceding claim wherein the thermal shock step is carried out for 1 to 2 minutes.

6. A process according to claim 4 or claim 5 wherein the thermal shock treatment is carried out at a temperature in the region of 900°C.

7. A process according to any one preceding claim wherein the silica powder has a particle size of less than 100 BS mesh.

8. A process according to any one preceding claim wherein the high temperature furnace in which the mixed carbon and silica powder is reacted is an argon plasma furnace.

9. A process according to any one preceding claim wherein the mixed carbon and silica powder is reacted for 1 to 4 minutes.

10. A process according to any one preceding claim wherein about 70% of the bulk of the crushed SPL material is constituted by the half-inch fraction.

11. A process according to any one preceding claim wherein the temperature of the reaction in step c when the crushed SPL is being treated with chromic acid is maintained below 90°C.

12. A process according to any one preceding claim wherein the average particle size of the carbon powder after the thermal shock treatment of step e is in the region of about 20 microns.

13. A process according to claim 8 wherein the mixed carbon and silica powder is carried into the high temperature zone of the furnace by a flow of argon gas.

14. A process according to any one preceding claim wherein the ratio of mixed carbon powder to silica powder is a stoichiometric ratio to produce silicon carbide.

15. A process according to any one preceding claim wherein the yield of carbon powder in step b is 30 to 35%.

16. A process according to any one preceding claim wherein the percentage conversion to silicon carbide is in the range from 70 to 85%.

17. A process according to any one preceding claim wherein the starting SPL material has a composition comprising: 8 to 9% fluorides; 7 to 8% alkalies; and, 2 to 3 % aluminium.

18. A process according to any one preceding claim wherein the carbon powder obtained after the thermal shock treatment is free flowing.
